# DEMANDE DE BREVET EUROPEEN

(11) **EP 0 608 673 A1**
(43) Date de publication de la demande: **03.08.1994**
(21) Numéro de dépôt: 93870012.7
(22) Date de dépôt: 25.01.1993
(51) Int. Cl.: B65G 47/90, B65B 21/12

(54) **Procédé et dispositif de préhension et de transport de bouteilles**

(71) Demandeur: SANTENS ENGINEERING SERVICES NV, B-9700 Oudenaarde (BE)
(72) Inventeur: Van Quickelberghe, Jacques, B-7890 Ellezelle (BE)
(74) Mandataire: Prignot, Jean

(57) **Abrégé**

L'invention a pour objet un procédé de préhension et de transport de bouteilles, ainsi que le dispositif pour l'application du procédé.
Le procédé de l'invention consiste à introduire librement le col 14 de la bouteille 11 à transporter dans un dispositif de préhension 1 entourant le dit col suivant au moins trois points d'appui, à soulever le dispositif de préhension, engagé sur le col de la bouteille, à partir d'une position de départ où la bouteille 11 repose horizontalement sur un support, à permettre au cours de ce mouvement que la bouteille pivote en 12 sous l'effet de la pesanteur jusqu'à ce que le col 14 vienne au contact des points d'appui du dispositif de préhension 1 et demeure coincé dans ce dernier, à maintenir le dispositif de préhension dans cette position et à poursuivre le mouvement pour soulever la bouteille et la transporter.

L'invention est applicable notamment aux machines de palettisation-dépalettisation de bouteilles de vin.

## Description

La présente invention a pour objet un procédé de préhension et de transport de bouteilles, ainsi qu'un dispositif pour la réalisation de ce procédé.

L'invention s'applique notamment à un procédé et un dispositif utiles pour la palettisation et la dépalettisation de bouteilles de vin.

Les bouteilles de vin requièrent de nombreuses manipulations avant d'être acheminées vers les points de vente, et nombre de ces manipulations sont effectuées de manière mécanisée.

C'est ainsi notamment que, de manière connue, la préhension et le transport de bouteilles de vin en vue de la palettisation, opération au cours de laquelle les bouteilles doivent être déposées couchées, s'effectuent à l'aide de systèmes à ventouse, agissant sur le corps de la bouteille. De tels systèmes requièrent, pour que la prise soit bien assurée, que la surface de prise sur la bouteille soit propre. Or après quelques mois de cave, les bouteilles sont inévitablement recouvertes d'une couche de poussière. Cette poussière est responsable, dans de nombreux cas, d'une prise inefficace de la ventouse, ayant souvent pour conséquence un bris de la bouteille.

Il existe également des dispositifs de préhension et de transport de bouteilles faisant usage d'un grappin en forme de tulipe. De tels dispositifs réalisent une prise ferme sur le col de la bouteille, mais ne permettent que la préhension et le transport de bouteilles en position debout, c'est-à-dire avec leur axe longitudinal vertical. Ils ne conviennent donc pas comme tels à la palettisation et à la dépalettisation des bouteilles. Par contre, étant donné la standardisation croissante des cols de bouteilles de vin, ils permettent la préhension et le transport de nombreux types de bouteilles de vin. Nombre de bouteilles de vin comportent en effet une bague CE-TI ⌀=30mm.

La présente invention a pour objet un procédé et un dispositif de transport de bouteilles permettant le transport des bouteilles sans serrage ni succion, tout en réalisant une prise ferme sur le col de la bouteille.

Le procédé de préhension et de transport de bouteilles suivant l'invention se caractérise en ce qu'il consiste
- à introduire librement le col de la bouteille dans un dispositif de préhension entourant le dit col par au moins trois points d'appui disposés dans un plan oblique par rapport à un plan médian du dit dispositif, de part et d'autre du dit plan médian,
- à modifier la position angulaire relative entre le dit dispositif de préhension, engagé sur le col de la bouteille, et la bouteille, à partir d'une position de départ où la bouteille repose sur un support, les points d'appui se disposant de part et d'autre du col de la bouteille,
- à poursuivre ce mouvement relatif de pivotement de la bouteille par rapport au dispositif de préhension, jusqu'à ce que le col de la bouteille vienne au contact des points d'appui du dispositif de préhension et demeure coincé dans ce dernier,
- à maintenir le dispositif de préhension dans une position assurant le coincement du col de la bouteille et à poursuivre le mouvement pour soulever la bouteille de son support et la transporter.

Suivant une autre caractéristique de l'invention, le procédé consiste
- à introduire librement le col de la bouteille dans un dispositif de préhension entourant le dit col par au moins trois points d'appui disposés dans un plan oblique par rapport à un plan médian du dit dispositif, de part et d'autre du dit plan médian,
- à modifier la position angulaire relative entre le dit dispositif de préhension, engagé sur le col de la bouteille, et la bouteille, à partir d'une position de départ où la bouteille repose sur un support, son axe longitudinal étant disposé au moins sensiblement parallèlement au dit support, les points d'appui se disposant de part et d'autre du col de la bouteille,
- à poursuivre ce mouvement relatif de pivotement de la bouteille par rapport au dispositif de préhension, jusqu'à ce que le col de la bouteille vienne au contact des points d'appui du dispositif de préhension et demeure coincé dans ce dernier sous l'effet de la pesanteur,
- à maintenir le dispositif de préhension dans une position assurant le coincement du col de la bouteille sous l'effet de la pesanteur et à poursuivre le mouvement pour soulever la bouteille de son support et la transporter.
- en fin de parcours, à déposer la bouteille sur un support au moins sensiblement parallèle au dispositif de préhension jusqu'à la coucher sur le dit support et ainsi réaliser le décoincement du col de la bouteille,
- à assurer le déplacement relatif du dispositif de préhension, suivant l'axe de la bouteille, à l'écart du col, jusqu'à le dégager entièrement de ce dernier.
Suivant encore une autre caractéristique de l'invention, le procédé consiste
- à amener la bouteille en position couchée, c'est-à-dire avec son axe longitudinal disposé au moins sensiblement horizontalement,
- à amener le dispositif de préhension dans une position correspondante, dans le prolongement du col de la bouteille,
- à déplacer horizontalement le dispositif de préhension convenablement orienté, en direction du col de la bouteille, jusqu'à ce qu'il pénètre de la distance d'engagement requise sur le col, le dispositif de préhension se disposant librement autour du dit col,
- à maintenir le dispositif de préhension dans cette position angulaire et à le soulever pour réaliser un coincement du col de la bouteille sous l'effet de la pesanteur,
- à transporter la bouteille à l'aide du dispositif de préhension maintenu dans cette position,
- en fin de parcours, à déposer la bouteille sur un support au moins sensiblement horizontal jusqu'à l'y coucher, et ainsi réaliser le décoincement du col de la bouteille,
- à assurer le déplacement du dispositif de préhension, suivant l'axe de la bouteille, à l'écart du col, jusqu'à le dégager entièrement de ce dernier.

Suivant une caractéristique supplémentaire du procédé de l'invention, lors du déplacement du dispositif de préhension en direction du col de la bouteille, ce dernier est guidé en direction du dispositif de préhension.

Suivant encore une autre caractéristique du procédé de l'invention, lors du déplacement du dispositif de préhension suivant l'axe de la bouteille, à l'écart du col, le col de la bouteille vient au contact d'un éjecteur.

L'invention a également pour objet le dispositif pour la réalisation de ce procédé.

Ce dispositif se caractérise en ce qu'il est constitué d'un élément de préhension comportant un moyen de fixation à un bras de transport, cet élément constituant un logement destiné à recevoir librement le col de la bouteille à transporter, le dit logement présentant au moins trois points d'appui pour le dit col, situés dans un plan oblique par rapport à un plan médian du dit élément de préhension, de part et d'autre du dit plan médian.

Suivant une autre caractéristique du dispositif de l'invention, l'élément de préhension est en forme de douille et le logement de la douille est au moins sensiblement cylindrique.

Suivant une caractéristique supplémentaire du dispositif, le logement comprend, au moins dans sa partie supérieure considérée par rapport au plan médian, à l'écart de l'orifice d'entrée du dit logement, un ressaut destiné à venir en engagement avec un épaulement formé sur le col de la bouteille, au niveau du goulot.

Suivant une autre caractéristique du dispositif, le ressaut est obtenu par un chambrage formé dans la douille, à l'écart de l'orifice d'entrée du logement.

Suivant encore une caractéristique supplémentaire, le ressaut est raccordé à l'orifice d'entrée par une paroi conique.

Suivant encore une caractéristique du dispositif de l'invention, l'élément de préhension comporte en outre une rampe de guidage pour le col de la bouteille, s'étendant en-avant de la douille et aboutissant à l'orifice d'entrée du logement.

Enfin, suivant une autre caractéristique du dispositif de l'invention, la paroi du fond de l'élément de préhension est percée d'un orifice pour permettre le passage d'un éjecteur.

L'invention sera mieux comprise en se reportant à la description ci-après, ainsi qu'au dessin annexé qui représente schématiquement, uniquement à titre d'exemple, divers modes de réalisation du dispositif de l'invention et dans lequel:
- la fig 1 montre de profil et en coupe un mode de réalisation préféré du dispositif de l'invention, et illustre également le procédé de préhension et de transport de bouteilles;
- les fig 2 et 3 sont des vues respectivement de face et de profil d'un autre mode de réalisation d'un dispositif suivant l'invention;
- la fig 4 donne une vue de profil et en coupe d'un autre mode de réalisation, extrêmement simplifié, d'un dispositif suivant l'invention, et
- la fig 5 représente, également de profil et en coupe, encore un autre mode de réalisation d'un dispositif suivant l'invention.

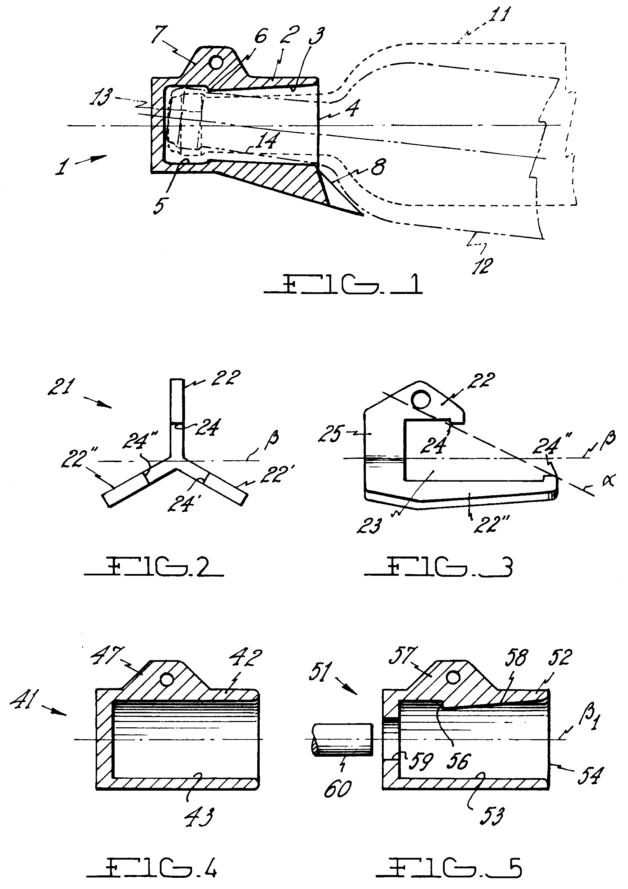

En se reportant au dessin, et plus particulièrement à la fig.1, un dispositif 1 de préhension et de transport de bouteilles, notamment de bouteilles de vin, est constitué d'un élément en forme de douille 2 formant un logement 3 pour le col d'une bouteille. Le logement 3 comporte, à son extrémité opposée à un orifice d'entrée 4 de la douille, un chambrage 5 destiné à former dans la paroi du logement un ressaut 6. Le dispositif 1 de préhension et de transport comporte également un moyen de fixation à un bras de transport, représenté au dessin sous forme d'une patte de fixation 7. Enfin, le dispositif 1 comporte aussi, en saillie sur la douille 2, une rampe de guidage 8 aboutissant à l'orifice d'entrée 4 de la douille.

Les fig 2 et 3 montrent, respectivement de face et de profil, un mode de réalisation simplifié d'un dispositif de préhension et de transport de bouteilles, dans lequel les conditions minimales requises pour assurer une préhension et un transport satisfaisant d'une bouteille sont plus clairement visibles.

Suivant ce mode de réalisation, un dispositif de préhension 21 est constitué de trois bras 22,22',22'' disposés en étoile, réunis en une pièce de tête commune 25. Les bras 22,22',22'' fournissent trois points d'appui respectivement 24,24',24'' pour le col d'une bouteille et constituent un logement 23. Afin de permettre une introduction libre du col de la bouteille dans le logement 23 et d'ensuite en assurer un coincement satisfaisant ainsi qu'il sera expliqué ci-après, ces points 24,24',24'' sont disposés dans un plan α oblique par rapport au plan médian β (en l'occurrence on entend par "plan médian" le plan perpendiculaire à la bissectrice de l'angle formé par les bras 22',22'', contenant l'axe longitudinal du dit dispositif), ces points étant en outre disposés de part et d'autre du dit plan médian.

Les modes de réalisation illustrés en fig 4 et 5 sont des modes de réalisation simplifiés du dispositif illustré en fig.1.

Suivant le mode de réalisation de la fig.4, le dispositif de préhension 41 est constitué d'une douille 42, présentant un logement cylindrique 43 et pourvue d'une patte de fixation 47 à un bras de transport non représenté.

Suivant le mode de réalisation de la fig.5, le dispositif de préhension 51 est également constitué d'une douille 52 présentant un logement cylindrique 53 et pourvue d'une patte de fixation 57. Le logement présente, dans la partie supérieure de la douille 52 considérée par rapport au plan médian β₁, dans sa partie éloignée de l'orifice d'entrée 54, un ressaut 56, raccordé à l'orifice d'entrée 54 par une paroi conique 58. La paroi de la douille opposée à l'orifice d'entrée 54 est percée d'un orifice 59 destiné à permettre le passage d'un éjecteur 60.

Ces divers modes de réalisation étant décrits, un mode de mise en oeuvre préféré du procédé de préhension et de transport de bouteilles à l'aide d'un dispositif suivant l'invention sera décrit ci-après en se reportant au mode de réalisation particulier de la fig.1.

Pour la préhension et le transport d'une bouteille de vin représentée en pointillés 11 à l'état couché à la fig 1, le dispositif de préhension est introduit librement sur le col de la bouteille jusqu'à occuper, vis-à-vis de la bouteille représentée en pointillés 11 la position illustrée à la fig.1, la bouteille posant, dans cette position, sur un support non représenté. Il est à noter que si, lors de cette approche du col de la bouteille par le dispositif, le goulot de la bouteille occupe une position plus basse que celle de l'orifice d'entrée 4 du logement, il vient d'abord au contact de la rampe de guidage 8, qui amène le dit goulot à hauteur de l'orifice 4, l'engagement du col dans le logement 3 pouvant alors s'effectuer correctement.

Le dispositif 11 est ensuite élevé verticalement sans modification de sa position angulaire, ce qui, dans un premier temps, amène le col de la bouteille, illustré en 14 en trait d'axe double, au contact de la paroi inférieure du logement. En poursuivant le mouvement, le col de la bouteille continue à être soulevé tandis que sous l'effet de la pesanteur, la bouteille tend à demeurer au contact de son support et prend une position oblique. Lorsque la bouteille arrive à la position illustrée en trait d'axe double en 12 à la fig 1, le col 14 de la bouteille est coincé dans le logement 3 sous l'effet du couple exercé par le poids de la bouteille, et la bouteille est soulevée en étant maintenue dans le dit logement. Dans cette position oblique, le ressaut 6 vient s'engager derrière un épaulement 13 formé sur le col de la bouteille, à proximité du goulot, empêchant ainsi tout dégagement intempestif du dit col.

Le transport peut alors être effectué sur le trajet voulu, en maintenant le dispositif de préhension dans la même position angulaire.

Lorsque la bouteille arrive à l'endroit voulu, le dispositif de préhension 1 est abaissé jusqu'à ce que la bouteille vienne au contact du support au moins sensiblement horizontal sur lequel elle doit être déposée. La poursuite de ce mouvement permet à la bouteille de quitter la position oblique jusqu'à reposer entièrement sur le support. Cette rotation de la bouteille ramène cette dernière dans la position illustrée en pointillés 11 à la fig.1 et assure le décoincement du col. Le dispositif de préhension 1 est alors déplacé horizontalement, suivant l'axe de la bouteille, à l'écart du col, jusqu'à s'en dégager totalement.

Lorsqu'il est fait usage d'un dispositif 51 tel qu'illustré à la fig.5, en phase finale du transport de la bouteille, lorsque la bouteille a été déposée sur son support et que le col de la bouteille a quitté sa position de coincement dans le dispositif de préhension 51, l'éjecteur 60 est avancé au-travers de l'orifice 59 jusqu'à venir au contact du goulot de la bouteille, ou du bouchon inséré dans le goulot. Le dégagement du col de la bouteille peut alors s'effectuer soit par une poursuite du mouvement de l'éjecteur 60, soit par un retrait du dispositif de préhension 51, soit par un mouvement combiné d'avance de l'éjecteur 60 et de retrait du dispositif de préhension 51.

Bien que dans le mode de mise en oeuvre du procédé décrit ci-dessus la bouteille occupe dans les phases initiale et finale du procédé une position couchée, c'est-à-dire une position dans laquelle son axe longitudinal est horizontal, il est évident que dans d'autres modes de mise en oeuvre du procédé cette position peut être simplement inclinée, ou même éventuellement verticale. Dans ces derniers cas, au moins en phase initiale du procédé, il faudra que le dispositif de préhension pivote pour assurer un coincement du col de la bouteille. De même, si au départ du pivotement du dispositif de préhension, le couple de coincement de la bouteille dans le dispositif résultant de la pesanteur est insuffisant, une action mécanique momentanée peut être exercée sur la bouteille par tout organe convenable, pour augmenter ce couple jusqu'à ce qu'un coincement satisfaisant soit réalisé, cette action étant interrompue dès que le couple résultant de la pesanteur est suffisant pour assurer un coincement satisfaisant.

Alors que le dispositif illustré en fig. 2 et 3 fournit trois points d'appui pour le col de la bouteille, il est évident que les dispositifs illustrés en fig 1, 4 et 5 fournissent également au moins ces trois points d'appui, la ligne de contact du col avec le logement cylindrique de ces dispositifs de préhension étant chaque fois une courbe.

Les dispositifs de préhension de l'invention sont de préférence utilisés en batterie sur des machines de palettisation-dépalettisation permettant, par exemple, la préhension et le transport simultané de groupes de 10 bouteilles.

## Revendications

1. Procédé de préhension et de transport de bouteilles, caractérisé en ce qu'il consiste
- à introduire librement le col (14) de la bouteille dans un dispositif de préhension (1,21,41,51) entourant le dit col par au moins trois points d'appui disposés dans un plan oblique (α) par rapport à un plan médian (β,β₁) du dit dispositif, de part et d'autre du dit plan médian,
- à modifier la position angulaire relative entre le dit dispositif de préhension (1,21,41,51), engagé sur le col (14) de la bouteille, et la bouteille, à partir d'une position de départ où la bouteille repose sur un support, les points d'appui se disposant de part et d'autre du col (14) de la bouteille,
- à poursuivre ce mouvement relatif de pivotement de la bouteille par rapport au dispositif de préhension (1,21,41,51), jusqu'à ce que le col (14) de la bouteille vienne au contact des points d'appui du dispositif de préhension (1,21,41,51) et demeure coincé dans ce dernier,
- à maintenir le dispositif de préhension (1,21,41,51) dans une position assurant le coincement du col (14) de la bouteille et à poursuivre le mouvement pour soulever la bouteille de son support et la transporter.

2. Procédé de préhension et de transport de bouteilles suivant 1, caractérisé en ce qu'il consiste
- à introduire librement le col (14) de la bouteille dans un dispositif de préhension (1,21,41,51) entourant le dit col par au moins trois points d'appui disposés dans un plan (α) oblique par rapport à un plan médian (β,β₁) du dit dispositif, de part et d'autre du dit plan médian,
- à modifier la position angulaire relative entre le dit dispositif de préhension (1,21,41,51), engagé sur le col (14) de la bouteille, et la bouteille, à partir d'une position de départ où la bouteille repose sur un support, son axe longitudinal étant disposé au moins sensiblement parallèlement au dit support, les points d'appui se disposant de part et d'autre du col de la bouteille,
- à poursuivre ce mouvement relatif de pivotement de la bouteille par rapport au dispositif de préhension (1,21,41,51), jusqu'à ce que le col (14) de la bouteille vienne au contact des points d'appui du dispositif de préhension et demeure coincé dans ce dernier sous l'effet de la pesanteur,
- à maintenir le dispositif de préhension (1,21,41,51) dans une position assurant le coincement du col (14) de la bouteille sous l'effet de la pesanteur et à poursuivre le mouvement pour soulever la bouteille de son support et la transporter.
- en fin de parcours, à déposer la bouteille sur un support au moins sensiblement parallèle au dispositif de préhension jusqu'à la coucher sur le dit support et ainsi réaliser le décoincement du col (14) de la bouteille,
- à assurer le déplacement relatif du dispositif de préhension (1,21,41,51), suivant l'axe de la bouteille, à l'écart du col (14), jusqu'à le dégager entièrement de ce dernier.

3. Procédé suivant 1 et 2, caractérisé en ce qu'il consiste
- à amener la bouteille en position couchée, c'est-à-dire avec son axe longitudinal disposé au moins sensiblement horizontalement,
- à amener le dispositif de préhension (1,21,41,51) dans une position correspondante, dans le prolongement du col (14) de la bouteille,
- à déplacer le dispositif de préhension (1,21,41,51) convenablement orienté, en direction du col (14) de la bouteille, jusqu'à ce qu'il pénètre de la distance d'engagement requise sur le col, le dispositif de préhension (1,21,41,51) se disposant librement autour du dit col,
- à maintenir le dispositif de préhension (1,21,41,51) dans cette position angulaire et à le soulever pour réaliser un coincement du col (14) de la bouteille sous l'effet de la pesanteur,
- à transporter la bouteille à l'aide du dispositif de préhension maintenu dans cette position,
- en fin de parcours, à déposer la bouteille sur un support au moins sensiblement horizontal jusqu'à l'y coucher et ainsi réaliser le décoincement du col de la bouteille,
- à assurer le déplacement du dispositif de préhension (1,21,41,51), suivant l'axe de la bouteille, à l'écart du col (14), jusqu'à le dégager entièrement de ce dernier.

4. Procédé suivant l'une quelconque des revendications 1 à 3, caractérisé en ce que lors du déplacement du dispositif de préhension (1) en direction du col (14) de la bouteille, ce dernier est guidé en direction du dispositif de préhension.

5. Procédé suivant l'une quelconque des revendications 1 à 3, caractérisé en ce qu'au cours du déplacement relatif du dispositif de préhension (51), suivant l axe de la bouteille, à l'écart du col (14), le col de la bouteille vient au contact d'un éjecteur (60).

6. Dispositif de préhension et de transport de bouteilles caractérisé en ce qu'il est constitué d'un élément de préhension (1,21,41,51) comportant un moyen de fixation (7,47,57) à un bras de transport, cet élément constituant un logement (3,23,43,53) destiné à recevoir librement le col (14) de la bouteille à transporter, le dit logement (3,23,43,53) présentant au moins trois points d'appui (24,24',24'') pour le dit col, situés dans un plan (α) oblique par rapport à un plan médian (β,β₁) du dit élément de préhension, de part et d'autre du dit plan médian.

7. Dispositif suivant 6, caractérisé en ce que l'élément de préhension (1,41,51) est en forme de douille (2,42,52) et en ce que le logement (3,43,53) de la douille est au moins sensiblement cylindrique.

8. Dispositif suivant 7, caractérisé en ce que le logement (3,53) comprend, au moins dans sa partie supérieure considérée par rapport au plan médian, à l'écart de l'orifice d'entrée (4,54) du dit logement, un ressaut (6,56) destiné à venir en engagement avec un épaulement (13) formé sur le col (14) de la bouteille, au niveau du goulot.

9. Dispositif suivant 8, caractérisé en ce que le ressaut (6) est obtenu par un chambrage (5) formé dans la douille (2), à l'écart de l'orifice d'entrée (4) du logement (3).

10. Dispositif suivant 8 ou 9, caractérisé en ce que le ressaut (6,56) est raccordé à l'orifice d'entrée (4,54) par une paroi conique (58).

11. Dispositif suivant l'une quelconque des revendications 6 à 10, caractérisé en ce que l'élément de préhension (1) comporte en outre une rampe de guidage (8) pour le col de la bouteille, s'étendant en-avant de la douille (2) et aboutissant à l'orifice d'entrée (4) du logement (3).

12. Dispositif suivant l'une quelconque des revendications 6 à 11, caractérisé en ce que la paroi du fond de l'élément de préhension (51) est percée d'un orifice (59) pour permettre le passage d'un éjecteur (60).
